# EUROPÄISCHE PATENTSCHRIFT

(11) **EP 0 380 730 B1**
(45) Veröffentlichungstag und Bekanntmachung des Hinweises auf die Patenterteilung: **04.01.1995**
(21) Anmeldenummer: 89101819.4
(22) Anmeldetag: 02.02.1989
(51) Int. Cl.: H04L 1/24

(54) **Verfahren und Schaltungsanordnung zur Überprüfung der Funktionsfähigkeit eines Datenübertragungsweges**
Method and circuit for checking the operational capability of a data transmission path
Méthode et circuit de contrôle du bon fonctionnement d'une voie de transmission de données

(43) Veröffentlichungstag der Anmeldung: 08.08.1990
(73) Patentinhaber: SIEMENS AKTIENGESELLSCHAFT, 80333 München (DE)
(72) Erfinder: Singer, Johannes, Dipl.-Ing., D-8034 Germering (DE)

(56) Entgegenhaltungen:
- EP-A- 0 025 767
- CH-A- 598 723
- IBM TECHNICAL DISCLOSURE BULLETIN, Band 24, Nr. 7A, Dezember 1981, Seiten 3506-3507, New York, US; J. CHOLAT-NAMY: "Remote loop test for multiport modems"
- BYTE, September 1983, Seite 62, BYTE Publications Inc., St. Peterborough, US;"Info-mate test modes"

## Beschreibung

Die Erfindung betrifft ein Verfahren und eine Schaltungsanordnung gemäß Oberbegriff des Patentanspruches 1 bzw. 4. Ein derartiges Verfahren ist bereits bekannt (z. B. aus der CCITT-Empfehlung V.54). Bei diesem bekannten Verfahren dient die Übertragung eines festgelegten Steuersignals ausschließlich für die Einrichtung einer hinsichtlich der Übertragung von Datensignalen transparenten Prüfschleife, um über diese von einer Sendeeinrichtung her abgegebene beliebige Prüfsignale (Prüftexte) zu übertragen.

Darüber hinaus ist es bereits im Zusammenhang mit der Überprüfung von Datenübertragungswegen, über welche Datensignale nach einem synchronen Übertragungsverfahren in Form von Envelopes übertragen werden, bekannt ("telcom report", 10. Jahrgang, 1987, Sonderheft "Multiplex- und Leitungseinrichtungen", Seiten 211 bis 217), einerseits durch Übertragung eines festgelegten Steuerenvelopes eine Prüfschleife der gerade genannten Art in einer Datenübertragungseinrichtung einzulegen und andererseits durch Übertragung eines von dem Steuerenvelope abweichenden, gesonderten Prüfenvelopes zu der jeweiligen Datenübertragungseinrichtung hin in dieser eine Überprüfung des Prüfenvelopes zu veranlassen. Bei einer fehlerfreien Auswertung, welche durch eine Kontroll-Lampe angezeigt wird, erfolgt eine Rückübertragung des zuvor ausgewerteten Prüfenvelopes.

Schließlich sind ein Verfahren und eine Schaltungsanordnung gemäß Oberbegriff des Patentanspruchs 1 bzw. 4 aus "IBM Technical Disclosure Bulletin", Band 24, Nr. 7A, Dez. 1981, Seiten 3506 bis 3507 ("Remote Loop Test for Multiport Modems"), New York, USA, bekannt. Bei diesem bekannten Verfahren bzw. bei dieser bekannten Schaltungsanordnung ist ausschließlich vorgesehen, daß von einem abgesetzten Modem, in welchem zuvor für einen Schleifentest eine Schleife eingelegt worden ist, empfangene Prüfsignale über diese Prüfschleife zurückübertragen werden, ohne in diesem Modem selbst eine Auswertung der Prüfsignale vorzunehmen.

Es ist nun Aufgabe der vorliegenden Erfindung, einen Weg zu zeigen, wie in einer in einen Datenübertragungsweg geschalteten Datenübertragungseinrichtung, über welchen lediglich die Übertragung eines Steuersignals für die Einlegung von Prüfschleifen vorgesehen ist, zusätzlich eine Auswertung übertragener Prüfsignale erfolgen kann.

Gelöst wird die vorstehend aufgezeigte Aufgabe durch die im kennzeichnenden Teil des Patentanspruches 1 angegebenen Merkmale.

Die Erfindung bringt den Vorteil mit sich, daß auf das Eintreffen eines vorgegebenen Steuersignals in einer Datenübertragungseinrichtung hin entsprechend der für den Datenübertragungsweg festgelegten Prüfprozedur ein transparenter Übertragungsweg für eine nachfolgende Prüfsignalübertragung geschaltet ist, daß aber nach Maßgabe der einem Steuersignal folgenden Prüfsignale mit einem geringen Steuerungsaufwand in der jeweiligen Datenübertragungseinrichtung wahlweise zusätzlich eine Auswertung der Prüfsignale erfolgt. Auf diese Weise ist es beispielsweise möglich, bei einer Inbetriebnahme eines Datenübertragungsweges durch Übertragung einer entsprechenden Prüfsignal-Folge eine Überprüfung sowohl in der die Prüfsignal-Folge abgebenden Sendeeinrichtung als auch in einer mit dieser über den Datenübertragungsweg verbundenen Datenübertragungseinrichtung durchzuführen, um die Funktionsfähigkeit des Datenübertragungsweges für beide Übertragungsrichtungen gesondert zu überprüfen. Für eine routinemäßige Überprüfung des Datenübertragungsweges kann dagegen eine von der festgelegten Prüfsignal-Folge abweichende Prüfsignal-Folge gewählt werden, so daß eine Überprüfung der Funktionsfähigkeit des Datenübertragungsweges ausschließlich in der die Prüfsignal-Folge abgebenden Sendeeinrichtung erfolgt.

Vorteilhafte Ausgestaltungen des Verfahrens gemäß der vorliegenden Erfindung sowie einer Schaltungsanordnung für dessen Durchführung ergeben sich aus den Patentansprüchen 2 bis 6.

Im folgenden wird nun die vorliegende Erfindung anhand von Zeichnungen beispielsweise näher erläutert.
FIG 1 zeigt ausschnittweise einen Datenübertragungsweg, für dessen Überprüfung die Erfindung angewandt ist,
FIG 2 zeigt den möglichen Aufbau einer in den in FIG 1 dargestellen Datenübertragungseinrichtungen jeweils vorhandenen Sendeanordnung und
FIG 3 zeigt den möglichen Aufbau einer in den in FIG 1 dargestellten Datenübertraungseinrichtungen jeweils vorhandenen Empfangsanordnung.

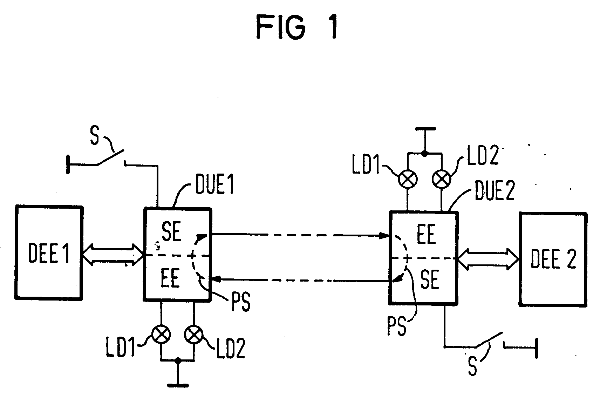

In FIG 1 ist ausschnittweise ein Vierdraht-Datenübertragungsweg dargestellt, in welchen zwei Datenübertragungseinrichtungen DUE1 und DUE2 eingefügt sind. An jede dieser Datenübertragungseinrichtungen ist jeweils ein Datenendgerät über beispielsweise eine Schnittstelle gemäß CCITT-Empfehlung V.35 oder X.21 angeschlossen. Entsprechend ihrer Zuordnung zu den Datenübertragungseinrichtungen sind diese mit DEE1 und DEE2 bezeichnet. Die Datenübertragungseinrichtungen mögen dabei beispielsweise derart ausgebildet sein, daß einerseits von dem jeweiligen Datenendgerät her mit einer Übertragungsgeschwindigkeit von 48, 56 oder 64 kbit/s zugeführte Datensignale und Steuersignale mit einer Übertragungsgeschwindigkeit von 64 kbit/s über den Vierdraht-Datenübertragungsweg weitergeleitet werden und andererseits mit einer Übertragungsgeschwindigkeit von 64 kbit/s auf dem Vierdraht-Datenübertragungsweg auftretende Datensignale und Steuersignale mit einer Übertragungsgeschwindigkeit von 48, 56 oder 64 kbit/s an das jeweilige Datenendgerät abgegeben werden.

Jede der Datenübertragungseinrichtungen DUE1 und DUE2 weist eine Empfangsanordnung EE und eine Sendeanordnung SE auf, zwischen denen auf ein über den Vierdraht-Datenübertragungsweg übertragenes Steuersignal in Form einer bei einer normalen Datensignalübertragung nicht auftretenden Bitfolge eine Prüfschleife einlegbar ist. Dieses Einlegen wird dabei durch ein von der Sendeanordnung her über den Vierdraht-Datenübertragungsweg übertragenes Quittungssignal in Form einer festgelegten Bitfolge bestätigt. Auf den Empfang dieses Quittungssignals hin kann dann von derjenigen Sendeeinrichtung her, von der zuvor das Steuersignal abgegeben worden ist, eine Übertragung von Prüfsignalen (Prüftexten) erfolgen. Bei der Sendeeinrichtung kann es sich dabei entweder um eines der in FIG 1 dargestellten Datenendgeräte oder um die damit verbundene Datenübertragungseinrichtung handeln. Erfolgte die Abgabe eines Steuersignals von einem Datenendgerät her, so erhält dieses ein dem gerade übertragenen Quittungssignal entsprechendes Bestätigungssignal von der Empfangsanordnung EE der zugehörigen Datenübertragungseinrichtung zugeführt. Erfolgte dagegen die Abgabe eines Steuersignals direkt von der Sendeanordnung einer Datenübertragungseinrichtung aus, beispielsweise auf die manuelle Betätigung einer in FIG 1 mit S bezeichneten Taste, so wird diese Sendeanordnung auf den Empfang des Quittungssignals hin von der zugehörigen Empfangsanordnung für die Abgabe einer Prüfmusterfolge mit einem zyklisch wiederholt auftretenden Prüfmuster (Bitfolge) aktiviert.

Die den Datenübertragungseinrichtungen jeweils zugehörige Empfangsanordnung EE ist gemäß der vorliegenden Erfindung derart ausgebildet, daß diese einerseits die zuvor erwähnte Prüfschleife aktiviert und andererseits auf das Erkennen eines Steuersignals hin innerhalb eines vorgegebenen Zeitintervalls zusätzlich das Auftreten des festgelegten Prüfmusters in einer Prüfmuster-Folge überwacht und mit dem erstmaligen Erkennen des festgelegten Prüfmusters im Zuge eines sich anschließenden Prüfzyklus eine Auswertung der Prüfmuster-Folge hinsichtlich einer fehlerfreien Übertragung vornimmt. Die Auswertung kann dabei beispielsweise darin bestehen, daß im Zuge eines Prüfzyklus ein mehrmaliger fehlerfreier Empfang des festgelegten Prüfmusters überwacht wird. Bei Vorliegen einer vorgegebenen Anzahl fehlerfrei empfanger Prüfmuster erfolgt eine optische Anzeige mit Hilfe eines mit der Empfangsanordnung der jeweiligen Datenübertragungseinrichtung verbundenen Anzeigeelementes. Bei diesem Anzeigeelement möge es sich beispielsweise um eine in FIG 1 mit LD1 bezeichnete Leuchtdiode handeln. Darüber hinaus ist mit der jeweiligen Empfangsanordnung ein weiteres, mit LD2 bezeichnetes Anzeigeelement in Form einer Leuchtdiode verbunden. Durch diese Leuchtdiode wird bei Nichterkennen des festgelegten Prüfmusters innerhalb dem festgelegten Zeitintervalls das Vorliegen einer Prüfschleife angezeigt.

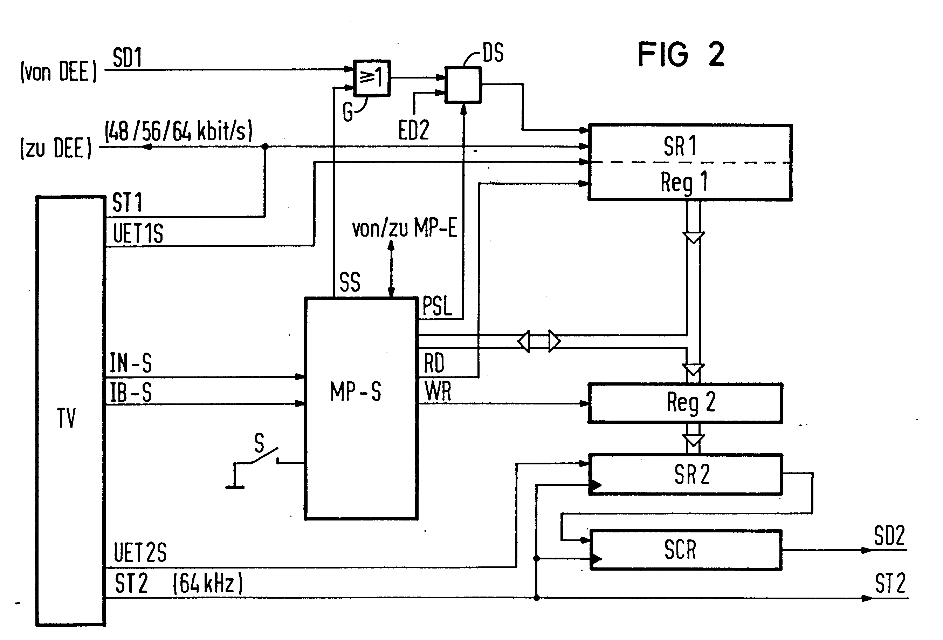

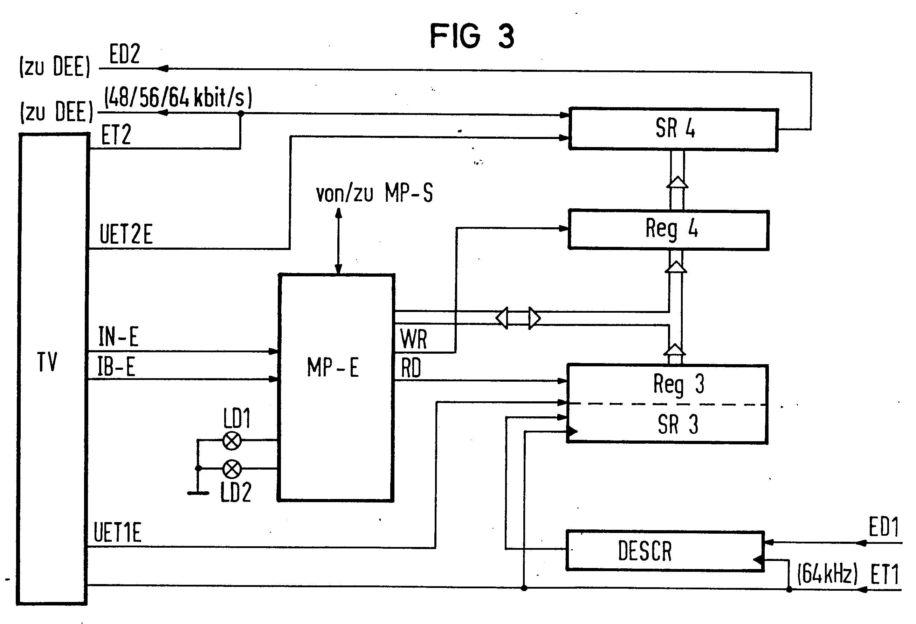

In FIG 2 ist ein möglicher Aufbau der in den Datenübertragungseinrichtungen DUE1 und DUE2 jeweils vorhandenen Sendeanordnung SE dargestellt. Dabei sind lediglich diejenigen Schaltungsteile aufgenommen, die für das Verständnis der vorliegenden Erfindung erforderlich sind. Diese Sendeanordnung weist als Steuereinrichtung einen Mikroprozessor MP-S beispielsweise in Form eines Ein-Chip-Mikroprozessors auf. An dessen beispielsweise aus 8 parallelen Einzelleitungen bestehenden Datenbussystem sind einerseits eine Einrichtung für die Aufnahme von Datensignalen und Steuersignalen, die der Sendeeinrichtung von dem zugehörigen Datenendgerät her zugeführt sind, und andererseits eine Einrichtung für die Weiterleitung von Datensignalen und Steuersignalen an den Vierdraht-Übertragungsweg angeschlossen. Die zuerst genannte Einrichtung besteht dabei aus einem ODER-Glied G, dessen einer Eingang mit einer zu dem jeweiligen Datenendgerät hin führenden Datenleitung SD1 verbunden ist. Über diese Datenleitung erhält die Sendeanordnung von dem zugehörigen Datenendgerät her zu übertragende Datensignale bzw. Steuersignale zugeführt. Die Übertragungsgeschwindigkeit ist dabei durch von einer in FIG 2 mit TV bezeichneten Taktversorgungseinrichtung her über eine Sendetakt-Leitung ST1 abgegebene Sendetaktimpulse festgelegt. Ein zweiter Eingang des ODER-Gliedes steht über eine Steuerleitung SS mit dem Mikroprozessor MP-S in Verbindung. Der Ausgang dieses ODER-Gliedes ist einem ersten Eingang einer über eine Leitung PSL von dem Mikroprozessor MP-S her steuerbaren, einem Schieberegister SR1 vorgeschalteten Datenweiche DS zugeführt. Ein zweiter Eingang dieser Datenweiche ist an eine Empfangsdatenleitung ED2 der in FIG 3 dargestellten Empfangsanordnung angeschlossen.

Das genannte Schieberegister SR1, welches beispielsweise aus 8 in Reihe geschalteten Registerzellen bestehen möge, erhält über einen Takteingang als Verschiebetaktimpulse die bereits genannten Sendetaktimpulse zugeführt und steht mit parallelen Ausgängen mit einer "tristate"-Ausgänge aufweisenden Registeranordnung Reg1 in Verbindung. Diese Registeranordnung, die die Schnittstelle zu dem Datenbussystem des Mikroprozessors MP-S darstellt, ist von der Taktversorgungseinrichtung TV her über eine Leitung UET1S mit einer Übernahme-Taktimpulsfolge beaufschlagt. Durch diese erfolgt je nach der für die Datenleitung SD1 vorgesehenen Übertragungsgeschwindigkeit nach jeweils 6, 7 bzw. 8 Sendetaktimpulsen eine Übernahme der gerade in das Schieberegister SR1 aufgenommenen Bitfolge. Diese Bitfolge wird anschließend in paralleler Form mit Hilfe eines über eine Leitung RD übertragenen, die genannten "tristate"Ausgänge freigebenden Leseimpulses von dem Mikroprozessor MP-S übernommen. Die Abgabe von Leseimpulsen durch den Mikroprozessor erfolgt im übrigen auf diesem von der Taktversorgungseinrichtung TV her zugeführte Unterbrechungssignale hin (Leitung IN-S).

Die bereits genannte Einrichtung für die Weiterleitung von Datensignalen bzw. Steuersignalen an den Vierdraht-Übertragungsweg weist eine Registeranordnung Reg2 auf. Von dieser werden über das Datenbussystem von dem Mikroprozessor MP-S her bereitgestellte 8 Bit umfassende Bitfolgen von Datensignalen bzw. Steuersignalen nacheinander übernommen. Die Registeranordnung erhält dafür über eine Leitung WR entsprechende Schreibimpulse zugeführt. Die Abgabe der Schreibimpulse erfolgt dabei nach Maßgabe von dem Mikroprozessor von der Taktversorgungseinrichtung TV her zugeleiteten Unterbrechungssignalen (Leitung IB-S). Der Registeranordnung Reg2 ist ein Schieberegister SR2 nachgeschaltet. Dieses Schieberegister ist von der Taktversorgungseinrichtung TV her einerseits über eine Leitung UET2S mit Übernahme-Taktimpulsen für eine Übernahme von in der Registeranordnung Reg2 gespeicherten Bitfolgen und andererseits über eine Sendetaktleitung ST2 mit Sendetaktimpulsen für eine serielle Weiterleitung der übernommenen Bitfolgen beaufschlagt. Diese Sendetaktimpulse erhält außerdem ein dem Schieberegister SR2 nachgeschalteter Verwürfler (Scrambler) SCR zugeführt, der Bitfolgen in verwürfelter Form an eine Sendedatenleitung SD2 abgibt.

Der Mikroprozessor MP-S steht im übrigen noch mit einer in FIG 2 mit S bezeichneten Taste sowie mit einem weiteren Mikroprozessor MP-E in Verbindung.

In FIG 3 ist ein möglicher Aufbau der in den Datenübertragungseinrichtungen DUE1 und DUE2 jeweils vorhandenen Empfangsanordnung EE dargestellt. Dabei sind auch hier lediglich diejenigen Schaltungsteile aufgenommen, die für das Verständnis der vorliegenden Erfindung erforderlich sind. Diese Empfangsanordnung weist als Steuereinrichtung den zuvor genannten Mikroprozessor MP-E beispielsweise in Form eines Ein-Chip-Mikroprozessors auf. An dessen Datenbussystem, das beispielsweise aus 8 parallelen Einzelleitungen bestehen möge, ist einerseits eine Einrichtung für die Aufnahme von Datensignalen und Steuersignalen, die im Empfangszweig des Vierdraht-Übertragungsweges übertragen werden, und andererseits eine Einrichtung für die Weiterleitung von Datensignalen und Steuersignalen an das zugehörige Datenendgerät angeschlossen.

Der Empfangszweig des Vierdraht-Datenübertragungsweges besteht aus einer Empfangsdatenleitung ED1 und einer Empfangstaktleitung ET1. Diese beiden Leitungen sind einem Entwürfler (Descrambler) DESCR zugeführt, der die auf der Empfangsdatenleitung ED1 auftretenden Bitfolgen nach einer Entwürflung an ein Schieberegister SR3 weiterleitet. Dieses Schieberegister, welches 8 in Reihe geschaltelte Registerzellen aufweisen möge, ist mit einem Takteingang mit der Empfangstaktleitung ET1 verbunden. Diese Empfangstaktleitung steht darüber hinaus mit einer Taktversorgungseinrichtung TV in Verbindung. Dieses leitet aus den über diese Empfangstaktleitung übertragenen Empfangstaktimpulsen sämtliche für den Betrieb der Empfangsanordnung erforderlichen Taktimpulse ab.

An die parallelen Ausgänge des Schieberegisters SR3 ist eine als Zwischenspeicher dienende Registeranordnung Reg3 mit "tristate"-Ausgängen angeschlossen. Diese "tristate"-Ausgänge bilden die Schnittstelle zu dem Datenbussystem des Mikroprozessors MP-E. Diese Registeranordnung ist von der Taktversorgungseinrichtung TV her über eine Leitung UET1E mit Übernahme-Taktimpulsen beaufschlagt. Durch diese erfolgt nach jeweils 8 auf der Empfangstaktleitung ET1 auftretenden Empfangstaktimpulsen eine Übernahme der in das Schieberegister SR3 aufgenommenen Bitfolge. Diese Bitfolge wird anschließend in paralleler Form durch einen über eine Leitung RD übertragenen Leseimpuls, durch welchen die "tristate"-Ausgänge der Registeranordnung Reg3 freigegeben werden, von dem Mikroprozessor MP-E für eine Weiterleitung an das zugehörige Datenendgerät übernommen. Die Abgabe von Leseimpulsen durch den Mikroprozessor wird dabei durch diesem von der Taktversorgungseinrichtung TV her zugeführte Unterbrechungssignale gesteuert (Leitung IB-E).

Die bereits genannte Einrichtung für die Weiterleitung von Datensignalen bzw. Steuersignalen an das zugehörige Datenendgerät weist eine Registeranordnung Reg4 auf, in welches über das Datenbussystem von dem Mikroprozessor MP-E her bereitgestellte, jeweils 8 Bit umfassende Bitfolgen übernommen werden. Dafür erhält diese Registeranordnung über eine Leitung WR entsprechende Schreibimpulse zugeführt. Die Abgabe dieser Schreibimpulse durch den Mikroprozessor wird durch von der Taktversorgungseinrichtung TV her über eine Leitung IN-E abgegebene Unterbrechungssignale gesteuert.

Der Registeranordnug Reg4 ist ein Schieberegister SR4 nachgeschaltet. Dieses ist von der Taktversorgungseinrichtung TV her einerseits über eine Leitung UET2E mit Übernahme-Taktimpulsen für eine Übernahme von in der Registeranordnung Reg4 gespeicherten Bitfolgen und andererseits über eine Empfangstaktleitung ET2 mit Empfangstaktimpulsen für eine serielle Weiterleitung der übernommenen Bitfolgen an das zugehörige Datenendgerät beaufschlagt. Dieses Datenendgerät ist dafür über eine Empfangsdatenleitung ED2 mit dem Ausgang des Schieberegisters SR4 verbunden. Außerdem erhält dieses Datenendgerät über die bereits genannte Empfangstaktleitung ET2 Empfangstaktimpulse zugeführt.

An den Mikroprozessor MP-E ist außerdem eine aus zwei Leuchtdioden LD1 und LD2 bestehende Aanzeigeeinrichtung angeschlossen.

Nachdem zuvor der Aufbau der in den Datenübertragungseinrichtungen DUE1 und DUE2 jeweils vorhandenen Sendeanordnung und Empfangsanordnung beschrieben worden ist, wird nunmehr auf deren Wirkungsweise näher eingegangen. Dabei wird zunächst der Fall betrachtet, daß von einer der in FIG 1 dargestellten Datenübertragungseinrichtungen her eine Funktionsprüfung des Vierdraht-Datenübertragungsweges durchgeführt werden soll. Auf die Betätigung der Taste S hin wird zunächst das ODER-Glied G durch einen von dem Mikroprozerssor MP-S abgegebenen Steuerbefehl in den Sperrzustand überführt. Anschließend gibt der Mikroprozessor als Steuersignal für das Einlegen einer Prüfschleife eine festgelegte Bitfolge bitgruppenweise über sein Datenbussystem an die Registeranordnung Reg2 ab. Von hier aus erfolgt über das Schieberegister SR2 und den Verwürfler (Scrambler) eine Weiterleitung dieser Bit folge an die Sendedatenleitung SD2. Mit dem Beginn der Abgabe der festgelegten Bit folge nimmt der Mikroprozessor MP-E der zugehörigen Empfangsanordnung einen Quittungsempfangszustand ein. Zu diesen wird der Mikroprozessor MP-E von dem Mikroprozessor MP-S her durch ein entsprechendes Signal aufgefordert. Auf diese Aufforderung hin überprüft der Mikroprozessor MP-E die über die Empfangsdatenleitung ED1 übertragenen, über das zugehörige Datenbussystem aufgenommenen Bitfolgen hinsichtlich des Auftretens einer ein Quittungssignal darstellenden festgelegten Bitfolge. Wird ein derartiges Quittungssignal erkannt, so erhält der Mikroprozessor MP-S ein entsprechendes Signal zugeführt. Auf dieses Signal hin nimmt dann dieser Mikroprozessor einen Sendezustand ein, in welchem im Zuge einer Prüfmuster-Folge zyklisch wiederholt ein festgelegtes Prüfmuster über das zugehörige Datenbussystem der Sendedatenleitung SD2 zugeführt wird.

Im folgenden wird nun noch auf die Steuerungsvorgänge in einer Datenübertragungseinrichtung eingegangen, welcher über die Empfangsdatenleitung ED1 ein Steuersignal für das Einlegen einer Prüfschleife zugeführt wird.

Der der betreffenden Datenübertragungseinrichtung zugehörige Mikroprozessor MP-E weist für das Erkennen eines über die Empfangsdatenleitung ED1 übertragenen Steuersignals eine Vergleichereinrichtung in Form eines ersten Vergleichsregisters auf. Auf das Auftreten eines solchen Steuersignals hin aktiviert dieser den zugeordneten Mikroprozessor MP-S derart, daß dieser einerseits eine ein Quittungssignal darstellende Bitfolge über sein Datenbussystem bitgruppenweise der Registeranordnung Reg2 zuführt. Von dort aus erfolgt dann eine Weiterleitung dieser Bitfolge über das Schieberegister SR2 und den Verwürfler (Scrambler) an die Sendedatenleitung SD2. Andererseits aktiviert der Mikroprozessor MP-S eine Prüfschleife, in dem der mit der Empfangsdatenleitung ED2 verbundene Eingang der Datenweiche DS leitfähig gesteuert ist. Damit verläuft die Prüfschleife ausgehend von der Empfangsdatenleitung ED1 über das Datenbussystem des Mikroprozessors MP-E zunächst zu der Empfangsdatenleitung ED2 und von hier aus über das Datenbussystem des Mikroprozessors MP-S zu der Sendedatenleitung SD2.

Mit dem Erkennen eines empfangenen Steuersignals nimmt der Mikroprozessor MP-E zusätzlich für eine vorgegebene Zeitspanne einen Prüfsignal-Empfangszustand ein, in welchem beispielsweise die über das Datenbussystem aufgenommenen Bitfolgen mit Hilfe eines zweiten Vergleichsregisters hinsichtlich des Auftretens des festgelegten Prüfmusters überprüft werden. Mit dem erstmaligen Erkennen eines solchen Prüfmusters wird ein als Vor- Rückwärtszähler benutztes Zählregister auf einen festgelegten Anfangszählerstand gesetzt. Von diesem Anfangszählerstand aus erfolgt in durch die Länge eines Prüfmusters festgelegten Zeitabständen eine Veränderung des aktuellen Zählerstandes nach Maßgabe des jeweils mit Hilfe des zweiten Vergleichsregisters gewonnenen Vergleichsergebnisses. D. h., daß beispielsweise mit jedem Erkennen des festgelegten Prüfmusters der jeweils gerade aktuelle Zählerstand inkrementiert, bei Nichterkennen dieses Prüfmusters dagegen dekrementiert wird. Bei Erreichen eines vorgegebenen Endzählerstandes erfolgt durch eine der beiden mit dem Mikroprozessor MP-E verbundenen Leuchtdioden, beispielsweise durch die Leuchtdiode LD1, eine optische Anzeige. Sporadisches Nichterkennen des festgelegten Prüfmusters führt, ausgehend von diesem Endzählerstand, zu einer Dekrementierung des aktuellen Zählerstandes und damit zu einem Verlöschen der betreffenden Leuchtdiode. Die Löschdauer ist dabei so festgelegt, daß auch einzelne Übertragungsfehler erkennbar sind.

Weist das zuvor erwähnte Zählregister am Ende des von dem Mikroprozessor MP-E eingenommenen Prüfsignal-Empfangszustandes den eingestellten Anfangszählerstand auf, so wird mit Hilfe der weiteren Leuchtdiode (LD2) lediglich das Vorliegen einer Prüfschleife optisch angezeigt. Diese Anzeige liefert in Abhängigkeit von dem gerade durchgeführten Prüfverfahren unterschiedliche Informationen. Bei einer Übertragung des festgelegten Prüfmusters weist diese Anzeige darauf hin, daß auf dem Übertragungsweg bis zu dem Mikroprozessor MP-E hin ein Übertragungsfehler vorliegt. Bei der Übertragung eines beliebigen, von dem festgelegten Prüfmuster abweichenden Prüfmusters geht aus dieser Anzeige dagegen hervor, daß über die Prüfschleife ein transparenter Übertragungsweg eingerichtet ist.

Vorstehend wurde die vorliegende Erfindung lediglich als Beispiel anhand von Datenübertragungseinrichtungen erläutert, denen jeweils eine Sendeanordnung und eine Empfangsanordnung in Form von Mikroprozessor-Anordnungen zugehörig sind. Es sei hier jedoch darauf hingewiesen, daß die vorstehend erläuterten Steuerungsvorgänge auch durch Anordnungen mit handelsüblichen digitalen Schaltkreisen durchgeführt werden können.

Darüber hinaus sei auch noch darauf hingewiesen, daß in den Figuren 2 und 3 zwar als Schnittstelle zu dem Datenübertragungsweg ein Scrambler bzw. Descrambler dargestellt ist. Diese Einrichtungen sind aber lediglich als Beispiel angegeben. Sie können entfallen, wenn keine verwürfelte Signalübertragung über den Datenübertragungsweg vorgesehen ist.

## Patentansprüche

1. Verfahren zur automatischen Überprüfung der Funktionsfähigkeit eines Datenübertragungsweges und wenigstens einer damit verbundenen Datenübertragungseinrichtung (z.B. DUE1) unter Verwendung einer in der jeweiligen Datenübertragungseinrichtung durch ein von einer Sendeeinrichtung (z.B. DEE2 bzw. SE der DUE2) her über den Datenübertragungsweg übertragenes, eine Prüfschleife forderndes Steuersignal aktivierten Prüfschleife (PS), über welche von der jeweiligen Sendeeinrichtung (DEE2 bzw. SE der DUE2) her anschließend Prüfsignale übertragen und für eine Auswertung von einer der Sendeeinrichtung zugeordneten Empfangseinrichtung (DEE2 bzw. EE der DUE2) wieder aufgenommen werden,
**dadurch gekennzeichnet,**
daß in der jeweiligen Datenübertragungseinrichtung (DUE1) auf das Erkennen des Steuersignals hin innerhalb eines vorgegebenen Zeitintervalls zusätzlich das Auftreten eines von der Sendeeinrichtung (DEE2 bzw. SE der DUE2) her in einer Prüfmuster-Folge zyklisch wiederholt abgegebenen festgelegten Prüfmusters überwacht und mit dem erstmaligen Erkennen des festgelegten Prüfmusters im Zuge eines Prüfzyklus eine Auswertung der Prüfmuster-Folge hinsichtlich einer fehlerfreien Übertragung vorgenommen wird.

2. Verfahren nach Anspruch 1,
**dadurch gekennzeichnet,**
daß im Zuge des Prüfzyklus ein mehrmaliger fehlerfreier Empfang des festgelegten Prüfmusters, bei Überschreiten des Zeitintervalls dagegen lediglich das Vorliegen einer Prüfschleife optisch angezeigt wird.

3. Verfahren nach Anspruch 1 oder 2,
**dadurch gekennzeichnet,**
daß das Steuersignal und die Prüfmuster-Folge von einer in den Datenübertragungsweg geschalteten Datenübertragungseinrichtung abgegeben werden und die über eine in einer weiteren Datenübertragungseinrichtung des Datenübertragungsweges verlaufende Prüfschleife übertragene Prüfmuster-Folge von der einen Datenübertragungseinrichtung für eine Auswertung wieder aufgenommen wird.

4. Schaltungsanordnung zur Durchführung des Verfahrens nach Anspruch 1 mit wenigstens einer in einen Datenübertragungsweg geschalteten Datenübertragungseinrichtung (z. B. DUE1), welche eine Empfangsanordnung (EE) für die Aufnahme von über den Datenübertragungsweg übertragenen Datensignalen und eine Sendeanordnung (SE) für die Abgabe von Datensignalen über den Datenübertragungsweg aufweist, wobei die Empfangsanordnung auf das Erkennen eines über den Datenübertragungsweg übertragenen, das Einlegen einer Prüfschleife fordernden Steuersignals hin eine zu der zugehörigen Sendeanordnung verlaufende Prüfschleife aktiviert, über welche nachfolgend über den Datenübertragungsweg aufgenommene Prüfsignale übertragbar sind,
**dadurch gekennzeichnet,**
daß die Empfangsanordnung (EE) derart ausgebildet ist, daß diese auf das Erkennen eines Steuersignals hin innerhalb eines vorgegebenen Zeitintervalls zusätzlich das Auftreten eines über den Datenübertragungsweg in einer Prüfmuster-Folge zyklisch wiederholt übertragenen festgelegten Prüfmusters überwacht und mit dem erstmaligen Erkennen des festgelegten Prüfmusters im Zuge eines Prüfzyklus eine Auswertung der Prüfmuster-Folge hinsichtlich einer fehlerfreien Übertragung vornimmt.

5. Schaltungsanordnung nach Anspruch 4,
**dadurch gekennzeichnet,**
daß die Empfangsanordnung (EE) eine erste Vergleichereinrichtung für das Erkennen eines über den Datenübertragungsweg übertragenen Steuersignals und für die Aktivierung der Prüfschleife, eine auf das Erkennen eines Steuersignals hin für ein vorgegebenes Zeitintervall aktivierte zweite Vergleichereinrichtung für das Erkennen des festgelegten Prüfmusters, eine als Vor-Rückwärtszähler ausgebildete Zähleinrichtung, deren aktueller Zählerstand von einem Anfangszählerstand aus bis zu einem vorgegebenen Endzählerstand in der Länge des Prüfmusters entsprechenden Zeitabständen jeweils nach Maßgabe eines gerade von der zweiten Vergleichereinrichtung abgegebenen Vergleichssignals veränderbar ist, sowie eine Anzeigeeinrichtung mit zwei gesonderten Anzeigeelementen (LD1, LD2) aufweist, deren eines Anzeigeelement (z. B. LD1) bei Erreichen des Endzählerstandes der Zähleinrichtung einen fehlerfreien Prüfzyklus und deren anderes Anzeigeelement (LD2) bei Vorliegen des Anfangszählerstandes der Zähleinrichtung am Ende des vorgegebenen Zeitintervalls lediglich das Vorliegen einer Prüfschleife anzeigt.

6. Schaltungsanordnung nach Anspruch 5,
**dadurch gekennzeichnet,**
daß die Empfangseinrichtung (EE) als Mikroprozessoranordnung mit einem ersten und einem zweiten Vergleichsregister, einem Zählregister und mit einer zwei Anzeigeelemente aufweisenden Anzeigeeinrichtung ausgebildet ist.

## Claims

1. Method for the automatic checking of the operational capability of a data transmission path and at least one data transmission device (e.g. DUE1) connected thereto, using a test loop (PS) activated in the respective data transmission device by a control signal which was transmitted from a transmitting device (e.g. DEE2 or SE of DUE2) over the data transmission path and requested a test loop, over which test loop test signals are then transmitted from the respective transmitting device (DEE2 or SE of DUE2) and are received again for an evaluation by a receiving device (DEE2 or EE of DUE2) assigned to the transmitting device, characterized in that in the respective data transmission device (DUE1), following the detection of the control signal within a predetermined time interval, in addition the appearance of a defined test pattern which is output cyclically repeatedly from the transmitting device (DEE2 or SE of DUE2) in a test pattern sequence is monitored, and when the defined test pattern is detected for the first time in the course of a test cycle, the test pattern sequence is evaluated with respect to an error-free transmission.

2. Method according to Claim 1, characterized in that in the course of a test cycle, a multiple error-free reception of the defined test pattern is visually indicated, but on the other hand only the presence of a test loop is indicated if the time interval is exceeded.

3. Method according to Claim 1 or 2, characterized in that the control signal and the test pattern sequence are output by a data transmission device connected into the data transmission path, and the test pattern sequence transmitted over a test loop proceeding in a further data transmission device of the data transmission path is received again by the one data transmission device for an evaluation.

4. Circuit arrangement for carrying out the method according to Claim 1, having at least one data transmission device (e.g. DUE1) connected into a data transmission path, which device has a receiver arrangement (EE) for receiving data signals transmitted over the data transmission path and a transmitter arrangement (SE) for the output of data signals over the data transmission path, in which, following the detection of a control signal which was transmitted over the data transmission path and requested the insertion of a test loop, the receiver arrangement activates a test loop proceeding to the associated transmitter arrangement, over which test loop test signals received over the data transmission path can be subsequently transmitted, characterized in that the receiver arrangement (EE) is designed in such a way that, following the detection of a control signal within a predetermined time interval, said arrangement additionally monitors the appearance of a defined test pattern transmitted cyclically repeatedly over the data transmission path in a test pattern sequence, and when the defined test pattern is detected for the first time in the course of a test cycle, it evaluates the test pattern sequence with respect to an error-free transmission.

5. Circuit arrangement according to Claim 4, characterized in that the receiver arrangement (EE) has a first comparator device for the detection of a control signal transmitted over the data transmission path and for the activation of the test loop, a second comparator device for the detection of the defined test pattern which is activated for a predetermined time interval following the detection of a control signal, a counting device designed as a forward/backward counter, the current counter reading of which can be varied from an initial counter reading up to a predetermined final counter reading in time intervals corresponding to the length of the test pattern depending in each case on a compare signal that has just been output by the second comparator device, as well as an indicating device having two separate indicating elements (LD1, LD2), the one indicating element (e.g. LD1) of which indicates an error-free test cycle when the final counter reading of the counting device is reached, and the other indicating element (LD2) of which indicates only the presence of a test loop if the initial counter reading of the counting device is present at the end of the predetermined time interval.

6. Circuit arrangement according to Claim 5, characterized in that the receiver arrangement (EE) is designed as a microprocessor arrangement having a first and a second compare register, a counting register and having an indicating device having two indicating elements.

## Revendications

1. Procédé de contrôle automatique de l'aptitude au fonctionnement d'une voie de transmission de données et d'au moins un dispositif de transmission de données (par exemple DUE1) relié à cette voie, moyennant l'utilisation d'une boucle de contrôle (PS) activée, dans le dispositif respectif de transmission de données, par un signal de commande qui est transmis à partir d'un dispositif d'émission (par exemple DEE2 ou SE de DUE2) par l'intermédiaire de la voie de transmission de données et active une boucle de contrôle, et au moyen de laquelle des signaux de contrôle sont ensuite transmis à partir du dispositif respectif d'émission (DEE2 ou SE de DUE2) et sont à nouveau enregistrés pour une exploitation par un dispositif de réception (DEE2 ou EE de DUE2) associé au dispositif d'émission, caractérisé par le fait
que l'on contrôle dans le dispositif respectif de transmission de données (DUE1), dé que le signal de commande a été identifié pendant un intervalle de temps prédéterminé, en outre l'apparition d'un motif de contrôle fixé, qui est délivré de façon répétée cycliquement à partir du dispositif d'émission (DEE2 ou SE de DUE2) dans une suite de motifs de contrôle, et, on procéde après la première identification du motif de contrôle fixé, au cours d'un cycle de contrôle, à une exploitation de la suite de motifs de contrôle pour déterminer si la transmission s'effectue sans erreur.

2. Procédé suivant la revendication 1, caractérisé par le fait qu'au cours du cycle de contrôle, on affiche optiquement une réception sans erreur réitérée du motif de contrôle fixé, alors qu'au contraire en cas de dépassement de l'intervalle de temps, on n'affiche optiquement que la présence d'une boucle de contrôle.

3. Procédé suivant la revendication 1 ou 2, caractérisé par le fait que le signal de commande et la suite de motifs de contrôle sont délivrés par un dispositif de transmission de données, qui est branché dans la voie de transmission de données, et la suite de motifs de contrôle, qui est transmise par l'intermédiaire d'une boucle de contrôle qui passe par un autre dispositif de transmission de données de la voie de transmission de données, est à nouveau reçue par l'un des dispositifs de transmission de données, en vue d'une exploitation.

4. Montage pour la mise en oeuvre du procédé suivant la revendication 1, comportant au moins un dispositif de transmission de données (par exemple DUE1) qui est branché dans une voie de transmission de données et qui comprend un dispositif de réception (EE) pour la réception de signaux de données transmis par l'intermédiaire de la voie de transmission de données, et un dispositif d'émission (SE) pour la délivrance de signaux de données par l'intermédiaire de la voie de transmission de données, le dispositif de réception activant dès l'identification d'un signal de commande, qui est transmis par l'intermédiaire de la voie de transmission de données et qui déclenche l'activation d'une boucle de contrôle, une boucle de contrôle, qui aboutit au dispositif d'émission associé et au moyen de laquelle des signaux de contrôle reçus par l'intermédiaire de la voie de transmission de données peuvent être ensuite transmis,
caractérisé par le fait que le dispositif de réception (EE) est agencé de telle sorte que dès que le signal de commande a été identifié pendant un intervalle de temps prédéterminé, le dispositif de réception (EE) contrôle en outre, l'apparition d'un motif de contrôle fixé, transmis d'une manière répétée cycliquement par l'intermédiaire de la voie de transmission de données dans une suite de motifs de contrôle, et après la première identification du motif de contrôle fixé, effectue, au cours d'un cycle de contrôle, une exploitation de la suite de motifs de contrôle pour déterminer si la transmission s'effectue sans erreur.

5. Montage suivant la revendication 4, caractérisé par le fait que le dispositif de réception (EE) comporte un premier dispositif comparateur servant à identifier un signal de commande transmis par l'intermédiaire de la voie de transmission de données et servant à activer la boucle de contrôle, un second dispositif comparateur activé dès l'identification d'un signal de commande pendant un intervalle de temps prédéterminé et servant à identifier le motif de contrôle fixé, un dispositif de comptage, qui est réalisé sous la forme d'un compteur progressif - régressif et dont l'état de comptage actuel peut être modifié depuis un état de comptage initial jusqu'à un état de comptage final prescrit, pendant des intervalles de temps correspondant à la longueur du motif de contrôle, et ce respectivement en fonction d'un signal de comparaison délivré précisément par le second dispositif comparateur, ainsi qu'un dispositif d'affichage comportant deux éléments d'affichage séparés (LD1, LD2), dont l'un (par exemple LD1) indique un cycle de contrôle sans erreur, lorsque l'état de comptage final du dispositif de comptage est atteint, et dont l'autre (LD2) affiche simplement la présence d'une boucle de contrôle en cas de présence de l'état de comptage initial du dispositif de comptage à la fin de l'intervalle de temps prédéterminé.

6. Montage suivant la revendication 5, caractérisé par le fait que le dispositif de réception (EE) est réalisé sous la forme d'un dispositif à microprocesseur comportant des premier et second registres de comparaison, un registre de comptage et un dispositif d'affichage comportant deux éléments d'affichage.
